Europäisches Patentamt

European Patent Office

Office européen des brevets

(19)

(11) Veröffentlichungsnummer: **0 370 362**
**A2**

(12) # EUROPÄISCHE PATENTANMELDUNG

(21) Anmeldenummer: 89121042.9

(22) Anmeldetag: 14.11.89

(51) Int. Cl.5: **C08L 23/08, C08L 51/00,**
**//(C08L23/08,51:00),**
**(C08L51/00,23:08)**

(30) Priorität: 25.11.88 DE 3839856

(43) Veröffentlichungstag der Anmeldung:
**30.05.90 Patentblatt 90/22**

(84) Benannte Vertragsstaaten:
**DE FR GB IT**

(71) Anmelder: **BAYER AG**

**D-5090 Leverkusen 1 Bayerwerk(DE)**

(72) Erfinder: **Lindner, Christian, Dr.**
**Im Wasserblech 11**
**D-5000 Köln 91(DE)**
Erfinder: **Piejko, Karl-Erwin, Dr.**
**Unterscheider Weg 7a**
**D-5060 Bergisch-Gladbach 2(DE)**
Erfinder: **Billinger, Otto, Dipl.-Ing**
**Birkenstrasse 13**
**D-5460 Linz(DE)**
Erfinder: **Kubens, Rolf, Dr.**
**Carl-Leverkus-Strasse 1**
**D-5068 Odenthal(DE)**

(54) **Weiche, flexible Polymermischungen.**

(57) Die Erfindung betrifft weiche, elastische Polymermischungen auf der Basis vernetzter, teilchenförmiger Pfropfpolymerisate und verseiften Ethylen-Vinylacetat-Copolymerisaten.

EP 0 370 362 A2

## Weiche, flexible Polymermischungen

Die Erfindung betrifft weiche, elastische Polymermischungen auf der Basis vernetzter, teilchenförmiger Pfropfpolymerisate und verseiften Ethylen-Vinylacetat-Copolymerisaten.

Die Mischungen eignen sich als Beschichtungsmaterialien. Sie haben hervorragende mechanische und physikalische Eigenschaften. Sie können technologisch besonders günstig verarbeitet werden, z.B. durch Kalander-, Kaschier- und Pulversinterverfahren.

Die neuen Polymermischungen eignen sich besonders zur Herstellung von Verkleidungsfolien mit lederartigem Aussehen.

Verkleidungsfolien mit lederartigem Aussehen werden z.B. für Innenverkleidungen in Kraftfahrzeugen vorzugsweise verwendet.

Solche Folien werden z.B. durch Kalandrierung einer Basisfolie und anschließendes Tiefziehen hergestellt.

Als Kunststoff für die Basisfolie wird üblicherweise PVC in Abmischung mit anderen Vinylmonomerpolymerisaten und Weichmachern eingesetzt. Nachteile derartiger Folien sind z.B. rasches Altern bei hohen Temperaturen. Diese Folien enthalten auch flüchtige, zur Migration neigende Komponenten und Halogen, überwiegend aus dem als Basisfolie verwendeten PVC.

Verkleidungsfolien für den KFZ-Bereich können z.B. durch direkte Sinterung eines Pulvers einer geeigneten Polymermischung hergestellt werden. Dieses Verfahren ("Slush moulding") benötigt Pulver, die unter bestimmten Temperatureinflüssen zu einer weichen, lederartigen Folie hoher Festigkeit sintern bzw. zusammenschmelzen können.

Die Verwendung von verseiften Ethylen-Vinylacetat-Copolymeren als Beschichtungsmaterialien ist bekannt (z.B. DE-A 1 669 151, DE-A 3 305 353, DE-A 3 447 250). Aus der DE-A 3 305 353 ist bekannt, die Eigenschaften solcher verseiften Polymerisate durch Zusatz von löslichen, unvernetzten (Meth)-Acrylatpolymeren zu verbessern. Die (Meth)Acrylate in unvernetzter Form werden in relativ geringen Mengen den verseiften Ethylen-Vinylacetat-Copolymeren zugesetzt. Bestimmte Weichheitsgrade können nicht eingestellt werden.

Es wurde nun gefunden, daß Mischungen aus verseiftem Ethylen-Vinylacetat-Copolymeren und teilchenförmigen, vernetzten Pfropfpolymerisaten besonders gut als Verkleidungsmaterialien geeignet sind.

Vorzugsweise werden aus diesen Mischungen Folien durch Sinterverfahren hergstellt. Die Mischungen haben gute Verträglichkeit, sind hinreichend weich und elastisch und können in weiten Bereichen variiert werden. Eigenschaften von verseiften Ethylen-Vinylacetat-Copolymeren wie Durchlässigkeit für bestimmte Gase, elektrische Eigenschaften werden kaum beeinflußt. Die erfindungsgemäßen Mischungen altern über lange Zeit auch bei hohen Temperaturen kaum.

Gegenstand der Erfindung sind thermoplastische Formmassen aus

a) einem verseiften Ethylen-Vinylacetat-Copolymer

und

b) einem teilchenförmigen, wenigstens teilvernetzten Pfropfpolymerisat, aus

10 - 80 Gew.-% aufgepfropftem Polymerisat auf der Basis von Vinylmonomeren aus der Reihe Styrol, Alkyl-(meth)acrylat, Acrylnitril, Vinylacetat

und

90 - 20 Gew.-% einer elastomeren, teilchenförmigen Pfropfgrundlage mit mittleren Teilchengrößen ($d_{50}$) von 0,06 bis 1 μm.

Bevorzugte erfindungsgemäße Mischungen bestehen vorzugsweise aus 95 bis 20 Gew.-% a) und 5 bis 80 Gew.-% b) besonders bevorzugt aus 80 bis 45 Gew.-% a) und 20 bis 5 Gew.-% b).

Erfindungsgemäß geeignete Ethylen-Vinylacetat-Copolymerisate a) enthalten vor der Verseifung Ethylen und Vinylacetat in einem Molverhältnis von 2:1 bis 20:1. Sie werden bis zu einem Hydrolysegrad von 80 bis 100 % verseift, vorzugsweise 90 bis 100 %.

Vorzugsweise enthalten die Ethylen-Vinylacetat-Copolymerisate vor der Verseifung Ethylen- und Vinylacetat in einem Molverhältnis von 10:1 bis 4:1.

Die erfindungsgemäß verwendbaren Ethylen-Vinylacetat-Copolymerisare können nach bekannten Methoden, z.B. durch radikalische Polymerisation bei Drucken von 100 bis 4000 bar und Temperaturen von 30 bis 250° C hergestellt werden. Ihr durchschnittliches Molekulargewicht kann im weitem Bereich schwanken. Bevorzugt werden Copolymerisate mit einem durchschnittlichen Molekulargewicht $\overline{M}_w$ von 10.000 bis 50.000 verwendet. Sie besitzen Schmelzindices (gemessen nach DIN 53735 bei 190° C bei einer Belastung von 2,16 kg) von 0,5 bis 200 g/10 Min., vorzugsweise von 5 bis 100 g/10 Min.

Die Verseifung der Ethylen-Vinylacetat-Copolymerisate kann nach bekannten Methoden erfolgen, z.B.

durch Verwendung von Alkalihydroxiden wie NaOH, Alkalialkoholaten wie NaOCH₃.

Erfindungsgemäß gut geeignet sind verseifte Ethylen-Vinylacetat-Copolymerisate, die vor der Verseifung Ethylen und Vinylacetat in einem Molverhältnis von 10:1 bis 4:1 enthalten. Diese verseiften Ethylen-Vinylacetat-Copolymerisate enthalten ca. 13 bis 30 Gew.-% einpolymerisierte Vinylalkohole.

Pfropfpolymerisate b) im Sinne der Erfindung sind durch Emulsionspolymerisation hergestellte teilchenförmige Produkte. Sie bestehen aus einem teilchenförmigen Kautschuk mit einem Gelgehalt von größer 80 Gew.-% und mittleren Teilchendurchmessern ($d_{50}$) von 0,06 - 1 $\mu$m als Pfropfgrundlage und einem Pfropfastpolymerisat auf der Basis von Monomeren wie Alkyl(meth)arylat, Styrol, Acrylnitril und Vinylacetat.

Besonders geeignete Pfropfpolymere b) enthalten 50 bis 80 Gew.-% Kautschuk als Pfropfgrundlage von 50 bis 20 Gew.-% aufgepfropfte Monomere, vorzugsweise Monomermischung mit einem Gehalt von 50 bis 100 Gew.-% Alkyl(meth)acrylat, bezogen auf 100 Gew. Tl. Pfropfauflage.

Als teilchenförmige Kautschuke für die Komponente b) können erfindungsgemäß als Pfropfgrundlage bekannte Elastomere verwendet werden. Diese können durch Dispersionspolymerisation als vernetzte, teilchenförmige Elastomerteilchen hergestellt werden. Sie können mit Vinylmonomeren gepfropft werden.

Bevorzugte Kautschuke für die Komponente b) sind Dienkautschuke, Alkylacrylatkautschuke, Silikonkautschuke usw.. Sie können in bekannter Weise durch Emulsionspolymerisation hergestellt werden. Bevorzugt sind Acrylatkautschuke.

Dienmonomerkautschuke für die Komponente b) sind z.B. Polybutadien, Polyisopren, Copolymerisate von Butadien mit bis zu 35 Gew.-% Comonomeren wie Styrol, Acrylnitril, Methylmethacrylat, $C_{1-6}$-Alkylacrylat. Sie können durch wäßrige, radikalische Emulsionspolymerisation hergestellt werden.

Acrylatkautschuke für die Komponente b) sind vernetzte, teilchenförmige Kautschuke, hergestellt durch Emulsionscopolymerisation aus $C_1$-$C_8$-Alkylacrylaten, bevorzugt $C_2$-$C_6$-Alkylacrylaten, gegebenenfalls in Mischung mit bis zu 15 Gew.-% Comonomeren wie Styrol, Methylmethacrylat, Butadien, Vinylmethylether, Acrylnitril und wenigstens einem polyfunktionellen vernetzenden Comonomeren, wie beispielsweise Divinylbenzole, Glykol-bis-acrylate, Bisacrylamide, Phosphorsäure-, Zitronensäuretrisallylester, Allylester von (Meth)Acrylsäure oder Triallyl(iso)cyanurat. Die Acrylatkautschuke können bis zu 5 Gew.-% der vernetzenden Comonomeren enthalten.

Geeignet im Sinne der Erfindung zur Herstellung der Pfropfpolymerisate für Komponente b) sind Gemische von Dien- und Alkylacrylatkautschukteilchen sowie Kautschukteilchen mit einer sogenannten Kern-Mantel-Struktur, z.B. Dienkautsckukkern-Mantel. Kern-Mantel-Kautschukteilchen werden bevorzugt.

Bevorzugtes Pfropfastpolymerisat für die Komponente b) sind Methyl(meth)acrylatpolymerisate, gegebenenfalls mit Comonomeren in Mengen bis zu 50 Gew.-% auf der Basis von $C_1$-$C_6$-Alkylacrylat, Acrylnitril oder Styrol.

Die Pfropfpolymerisate a) werden hergestellt, indem man in einer ersten Stufe durch Emulsionspolymerisation eine Emulsion der einzusetzenden Kautschukteilchen erzeugt. Danach wird in an sich bekannter Weise wenigstens ein Vinylmonomer radikalisch in Gegenwart der Kautschukemulsion derart pfropfpolymerisiert, daß wenigstens ein Teil der Monomeren auf den Kautschuk aufgepfropft wird. Diese Anteile des aufgepfropften Polymerisats werden durch Messung des Pfropfgrads oder der Pfropfausbeute bestimmt. Als Pfropfpolymerisate im Sinne der Erfindung werden unabhängig vom Pfropfgrad die Produkte bezeichnet, die durch Pfropfpolymerisation von Vinylmonomeren in Anwesenheit einer Kautschukemulsion erhalten werden.

Das Zumischen der Komponente b) zum verseiften Ethylen-Vinylacetat-Copolymeren kann nach bekannten Methoden (z.B. DE-A 2 611 548) erfolgen. Eine weitere Methode der Zumischung ist beispielsweise die Nachbehandlung eines bereits ausgefällten, zerkleinerten, porösen verseiften Ethylen-Vinylacetat-Copolymers in wäßriger Suspension mit einer Dispersion der Komponente b) in einem mit Wasser nicht mischbaren Lösungsmittel (z.B. Toluol, Petrolether, Waschbenzin, Cyclohexan, n-Heptan, Ethylacetat, Chlorkohlenwasserstoffe wie Chloroform, Methylenchlorid, Trichlorethylen u.a.).

Ein bevorzugtes Verfahren besteht z.B. darin, die erfindungsgemäß verwendeten Komponenten b) bereits in die Umesterungsreaktion neben dem EVA-Copolymer mit vozulegen und anschließend wie üblich aufzuarbeiten.

Weiterhin können die erfindungsgemäß eingesetzten verseiften Ethylen-Vinylacetat-Copolymeren in einem Kneter oder in einem Extruder mit den Komponenten b) vermischt werden.

Die erfindungsgemäß verwendbaren Beschichtungspulver können aus den erhaltenen Granulaten durch Mahlung hergestellt werden.

Übliche Zusätze, z.B. Füllstoffe, Weichmacher, Farbstoffe und anorganische und organische Pigmente können dem Beschichtungspulver in üblichen Mischungsgeräten zugesetzt werden. Die Menge z.B. der zugesetzten Füllstoffe beträgt üblicherweise 0,5 bis 30 Gew.-%.

Geeignete Pigmente sind z.B. Titandioxid, Chromoxidgrün, Ultramarin, Cadmiumrot bzw. -gelb, Ruß u.a.

3

Metalleffekte lassen sich durch Zugabe von Aluminium, Bronzepulver erzielen. Durch Aufschäumung der Schicht durch organische Treibmittel (z.B. Azodicarbonamid, Diphenylsulfon-3,3'-disulfohydrazid) kann man leichte und stoßfeste Beschichtungen aufbringen.

Die erfindungsgemäßen Formmassen lassen sich in bekannter Weise durch Zusatz polyfunktioneller Additive vernetzen, z.B. durch Polycarbonsäuren, deren Chloride, Säureanhydride, Polyisocyanate, sowie deren verkappte Formen oder Polycarbodiimide. Die kann gegebenenfalls auch während der Verarbeitung, z.B. zu Folien geschehen.

Die erfindungsgemäßen Formmassen (Mischungen) können zur Herstellung von geformten Körpern, vorzugsweise Folien, verwendet werden.

Beíspiele

I. Die Komponente a):

Ethylen-Vinylacetat-Copolymer mit einem Gehalt von 34,4 Gew.-% einpolymerisiertem Vinylacetat (und einem nach DIN 53735 bei 190° C und 2,16 kg Belastung gemessenen Schmelzindex von 84 g/10 Min.) durch Verseifung in methanolischer Na-Methylatlösung, gemäß der DE-A 3 305 353, Beispiel 2.

II. Eingesetzte Pfropfpolymerisate b)

II. 1) Pfropfpolymerisat aus 80 Gew. Tl. eines grobteiligen Polybutadiens einer mittleren Teilchengröße ($d_{50}$) von 0,4 μm und einem Gelgehalt (in Toluol) von 89 Gew.-% und
20 Gew. Tl. aufgepfropfte Monomere aus 90 Gew.-%. Methylmethacrylat und 10 Gew.-% n-Butylacrylat.
Die Herstellung erfolgt durch radikalische Pfropfung einer Methylmethacrylat/n-Butylacrylatmischung in Emulsion in Anwesenheit des grobteiligen Polybutadienlatex. Der hergestellte Pfropfpolymerlatex hat einen Polymerfeststoffgehalt von 35 Gew.-%. Er wird zur Herstellung der Mischung eingesetzt.

II. 2) Pfropfpolymerisat, hergstellt analog II 1) aus
70 Gew. Tl. Polybutadien und
30 Gew. Tl. Methylmethacrylat/n-Butylacrylat (90/10)-Copolymer.
Der Polymergehalt des Latex beträgt 35 Gew.-%.

II. 3) Propfpolymerisat aus
70 Gew. Tl. eines grobteiligen Acrylatkautschuks einer mittleren Teilchengröße ($d_{50}$) von 0,52 μm und einem Gelgehalt (in DMF) von 95 Gew.-% (hergestellt durch vernetzende Copolymerisation von n-Butylacrylat/Triallylcyanurat gemäß EP-A 34748) und
30 Gew. Tl. aufgepfropfte Monomere aus 90 Gew.-% n-Butylacrylat.
Die Herstellung erfolgt durch radikalische Emulsionspfropfung. Der erhaltene Pfropfpolymerlatex besitzt einen Polymerfeststoffgehalt von 37 Gew.-%.
Die Pfropfpolymerisate II werden aus ihren Emulsionen durch übliche Koagulation mittels Mg-Sulfat bei pH-Werten von 4 bis 5 und Temperaturen von 70 bis 95° C isoliert, mit Wasser gewaschen und bis auf eine Restfeuchte kleiner 0,8 Gew.-% zu einem Pulver getrocknet.

III. Mehrfunktionelle Isocyanatvernetzer

III. 1) dimerisiertes Toluylen-2,4-diisocyanat

III. 2) mit ε-Caprolactam blockiertes, cycloaliphatisches Polyisocyanat-Addukt mit einem NCO-Gehalt von 15 % (50 %ige Lösung in Aceton).

IV. Herstellung und Prüfung erfindungsgemäß der Polymermischungen

Die Komponenten I, II und III werden in den in Tabelle 1 angegebenen Verhältnissen auf einem Mischwalzwerk 10 Min. bei 180° C homogenisiert und bei 190° C zu Prüfkörpern verpreßt. Die Eigenschaften der Prüfkörper sind in Tabelle 2 aufgelistet.

| Prüfmethoden: | |
|---|---|
| Zugfestigkeit | : DIN 53 455 |
| Dehnung | : DIN 53 455 |
| Weiterreißfestigkeit | : DIN 53 515 |
| Shore-Härte | : DIN 53 505/Typ D |

Tabelle 1:

| Zusammensetzung der Formmassen (in Gew.-Teilen) | | | | | | |
|---|---|---|---|---|---|---|
| Nr. | Gewichtsanteile | | | | | |
| | I | II.1 | II.2 | II.3 | III.1 | III.2 |
| 1 | 65,5 | 65 | - | - | 0,8 | 19,5 |
| 2 | 65,5 | - | 65 | - | 0,8 | 19,5 |
| 3 | 65,5 | - | - | 65 | 0,8 | 19,5 |
| 4 | 100 | 50 | - | - | 0,5 | 10 |
| 5 | 100 | - | - | 50 | 0,5 | 10 |
| 6 | 130 | - | - | - | 1,2 | 19,5 |
| (Vergleich) | | | | | | |

Tabelle 2:

| Eigenschaften der Mischungen aus Tabelle 1 | | | | |
|---|---|---|---|---|
| Versuch Nr. | Zugfestigkeit [MPa] | Dehnung [%] | Weiterreißfestigkeit [N/mm] | Shore-Härte [15"] |
| 1 | 10 | 150 | 40 | 30 |
| 2 | 11 | 150 | 50 | 32 |
| 3 | 10 | 145 | 42 | 33 |
| 4 | 13 | 143 | 52 | 36 |
| 5 | 12 | 140 | 50 | 37 |
| 6 | 14 | 150 | 60 | 42 |
| (Vergleich) | | | | |

## Ansprüche

1. Flexible thermoplastische Formmassen aus

a) einem verseiften Ethylen-Vinylacetat-Copolymer

und

b) einem teilchenförmigen, wenigstens teilvernetzten Pfropfpolymerisat aus

10 - 80 Gew.-% aufgepropftem Polymerisat auf der Basis von Vinylmonomeren aus der Reihe Styrol, Alkyl-(meth)acrylat, Acrylat, Acrylnitril, Vinylacetat

und

90 - 20 Gew.-% einer elastomeren teilchenförmigen Pfropfgrundlage mit mittleren Teilchengrößen ($d_{50}$) von 0,6 bis1 $\mu$m.

2. Verwendung der Mischungen nach Anspruch 1 zur Herstellung geformter Körper.